Europäisches Patentamt

European Patent Office

Office européen des brevets

(11) Publication number: **0 078 042**
**B1**

(12) **EUROPEAN PATENT SPECIFICATION**

(45) Date of publication of patent specification: **10.04.85**　　(51) Int. Cl.⁴: **H 01 F 1/11,** C 01 G 37/027

(21) Application number: **82109818.3**

(22) Date of filing: **23.10.82**

(54) Surface modified ferromagnetic chromium dioxide.

| | |
|---|---|
| (30) Priority: **26.10.81 US 314870** | (73) Proprietor: **E.I. DU PONT DE NEMOURS AND COMPANY**<br>**1007 Market Street**<br>**Wilmington Delaware 19898 (US)** |
| (43) Date of publication of application:<br>**04.05.83 Bulletin 83/18** | |
| | (72) Inventor: **Dombrowski, Henry Stephen**<br>**7 Denbeigh Court**<br>**Wilmington Delaware 19808 (US)** |
| (45) Publication of the grant of the patent:<br>**10.04.85 Bulletin 85/15** | |
| (84) Designated Contracting States:<br>**DE IT NL** | (74) Representative: **Werner, Hans-Karsten, Dr. et al**<br>**Deichmannhaus am Hauptbahnhof**<br>**D-5000 Köln 1 (DE)** |
| (56) References cited:<br>**EP-A-0 007 764**<br>**EP-A-0 029 687**<br>**DD-A- 135 374**<br>**US-A-2 956 955**<br>**US-A-3 034 988**<br>**US-A-3 529 930**<br>**US-A-3 640 871**<br>**US-A-3 778 373**<br>**US-A-4 068 038**<br>**US-A-4 244 932** | |

Courier Press, Leamington Spa, England.

## Description

### Background of the invention
### Field of the invention

This invention relates to a stabilized ferromagnetic chromium dioxide composition which is stabilized against degradation of magnetic properties.

### State of the art

Ferromagnetic chromium dioxide has many desirable characteristics which make it useful for certain applications in the manufacture of magnetic recording tapes, magnetic memory recorders, computers and other applications. Magnetic properties which are particularly important are the intrinsic coercive force (iHc), saturation per gram ($\sigma s$), retentivity or remanence per gram ($\sigma r$), and the ratio of the remanence to the saturation ($\sigma r/\sigma s$). These terms are further defined in Bottjer et al. U.S. 3,529,930 "Process for Improving Ferromagnetic Properties of Chromium Dioxide by Heating in an Oxidizing Environment" (1970).

One problem with ferromagnetic chromium dioxide is that it reacts slowly with water and some organic materials to form nonmagnetic material. Thus, by a process of aging, unstabilized chromium dioxide will lose magnetic properties when incorporated in a magnetic element such as a tape or disk.

Bottjer et al in U.S. 3,512,930 "Stabilized Ferromagnetic Chromium Dioxide" (1970) disclosed that ferromagnetic chromium dioxide could be stabilized by treating with a reducing agent to form a surface which does not oxidize benzhydrol and has a characteristic x-ray diffraction pattern. Suitable reducing agents include $H_2S$, sodium sulfite, $SO_2$, and alkanols. In a preferred embodiment the ferromagnetic chromium dioxide which was reacted with the reducing agent was pretreated for use by a thermal "upgrading" process described in U.S. 3,529,930.

U.S. 3,958,068, Umeki et al, discloses precipitating a ferromagnetic salt on the surface of a solid ferromagnetic oxide and reducing the precipitated metal salt to form the free metal as a surface coating. Thus, chromium dioxide particles could be stabilized by the precipitation of ferrous hydroxide on the surface and subsequent reduction to iron metal. Japanese Patent 21200/76 discloses a stabilized ferromagnetic chromium dioxide composition prepared by depositing magnetic iron oxide on the surface thereof by means of an immersion coating process.

Thus, the prior art contains numerous suggestions for stabilizing ferromagnetic chromium dioxide by means of a protective outer layer, this being formed by the action of reducing agents, or by precipitation techniques or surface coatings. However, the latter two methods result in disadvantages such as sacrifice of magnetic properties and the need for costly and time consuming process steps. The use of reducing agents is commercially feasible, but nevertheless leaves open the possibility that the desired product could be produced by a simpler and less expensive process.

### Summary of the invention

The present invention is directed to a stabilized ferromagnetic chromium dioxide composition characterized by acicular ferromagnetic chromium dioxide particles having a nonmagnetic protective surface phase composed of the adduct into the surface structure formed by contact between the particle surface and an aqueous solution of a metal salt, said protective surface phase being determined by soft x-ray analysis (ESCA) as containing 0.01 to 0.25 atom of included metal per atom of chromium. The included metal is preferably iron, tin, cobalt, or manganese. Metal salts which yield $Fe^{+2}$ and $Sn^{+2}$ cations in solution are particularly useful in this invention. The invention is also directed to the process for preparing a stabilized ferromagnetic chromium dioxide composition which is characterized by contacting acicular ferromagnetic chromium dioxide particles with an aqueous solution of a metal cation to form a protective surface adduct on said particles, said process being conducted at a temperature of $-10°$ to $110°C$, and a pH of 1—8 for a time sufficient to chemisorb or chemically bond the metal ions of such salt to the surface of the $CrO_2$ particles. Because this process is carried out at a pH of 1 to 8 the hydroxide ion concentration is kept sufficiently low so that the cations used in the invention are not removed by precipitation.

The present invention is also directed to a magnetic recording member comprising a support bearing a layer which is characterized by containing the stabilized ferromagnetic chromium dioxide composition.

### Brief description of the drawings

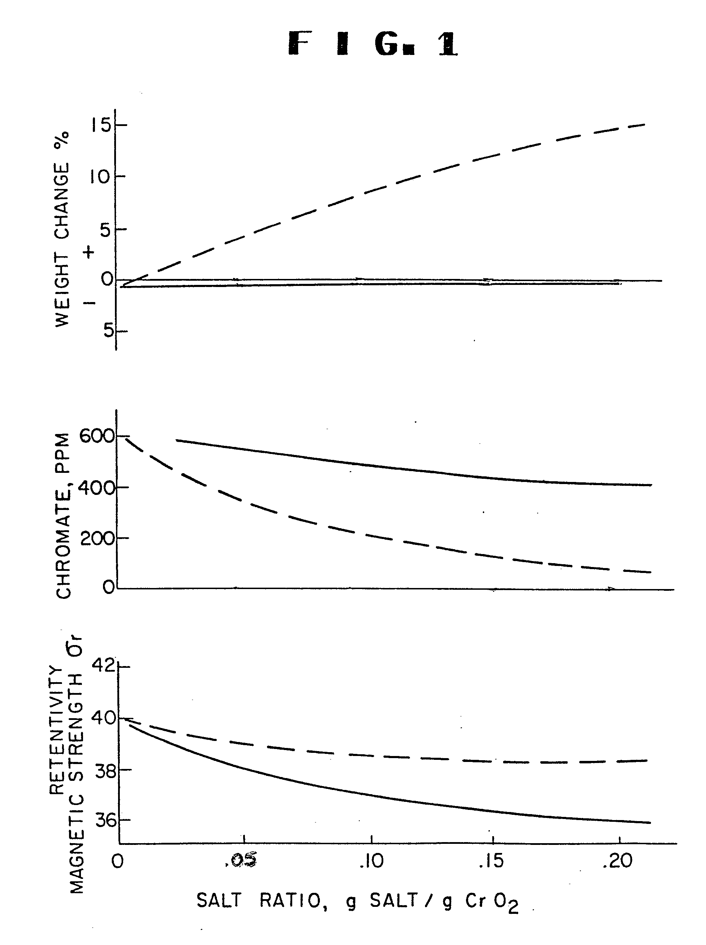

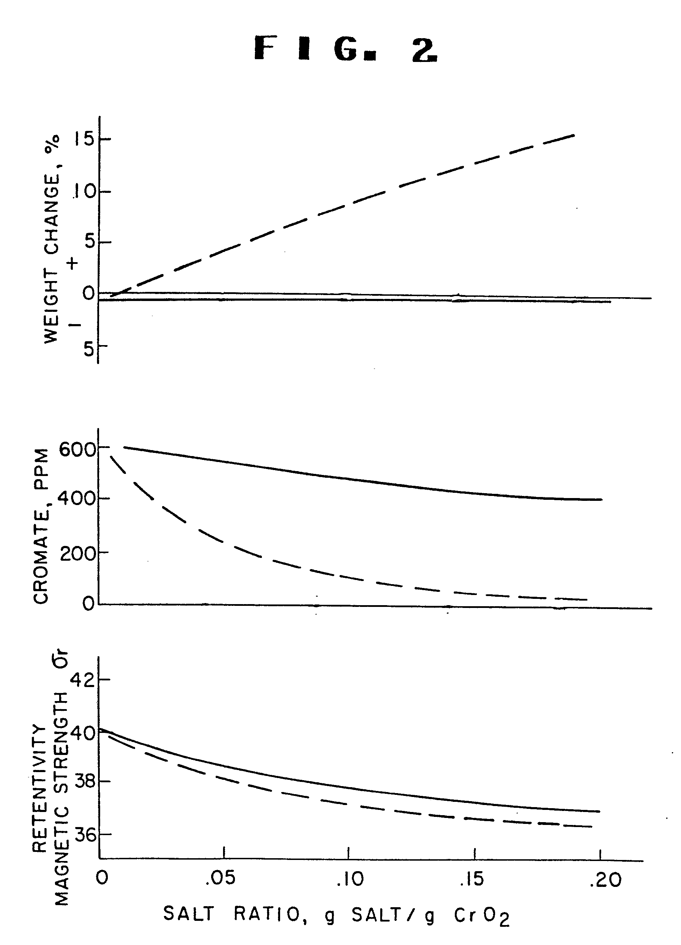

Figures 1 and 2 are graphs which set forth a comparison of magnetic and chemical properties of the surface-modified ferromagnetic chromium dioxide of the present invention (broken line) and those of a control (solid line).

### Detailed description of the invention

Acicular ferromagnetic chromium dioxide useful for the practice of the present invention can be produced by high temperature and high pressure techniques well known in the art such as the processes described in U.S. Patents 2,956,955, 3,117,093 and 3,278,263. A variety of metal oxides may be added to improve magnetic properties as in U.S. 3,640,871 (tellurium and iron), U.S. 3,778,373 (iron modifiers, among others), and U.S. 3,034,988 (a metal having an atomic number of 22—281). A particular useful pretreatment for ferromagnetic chromium dioxide, but one which is not essential for this invention, is the

2

**0 078 042**

thermal "upgrading" treatment described in U.S. 3,529,930, supra, which consists essentially of heating preformed $CrO_2$ having a saturation of at least 75 emu./g. and a coercive force of 200—800 oersteds in an oxidizing environment at 150°C to 450°C at a pressure of 0.2—3000 atmospheres.

In the present invention chromium dioxide particles gain weight proportionally to the quantity of metal cations which react with the particle surface, rather than undergoing the slight weight gain or loss which is typical of the stabilized $CrO_2$ prepared by the process of U.S. 3,512,930. This indicates that the metal salts of the present invention do not function just as reducing agents, but serve as metal cation donors for the formation of a surface adduct by chemically bonding or chemisorbing to the surface of the acicular chromium dioxide particles. The metal cations thus become part of the stabilized surface structure and account for the net gain in weight accompanying the reaction. Also both physical and chemical properties are improved with the positioning of a new metal adduct on the particle surface. Not only does the present invention provide protection against chemical degradation of magnetic properties but in addition provides improved product durability and performance in terms of magnetic strength, stability, headwear, and signal to noise ratio.

Metal salts suitable for the practice of the present invention must be compatible with the acicular chromium dioxide and probably must also be capable of undergoing oxidation within the reaction environment. In this respect a number of metallic compounds which have been found to be effective modifying elements for acicular chromium dioxide would be expected to be similarly suitable for the surface effect of the present invention, e.g., Fe, Sb, Te, Sn, Mn and Ru in particular. Preferred are $Fe^{+2}$, $Fe^{+3}$, $Sn^{+2}$, $Co^{+2}$, and $Mn^{+2}$.

The anion of the metal salt does not appear to be significant as long as the salt is soluble so that it can be employed in aqueous solution. Thus, sulfates, chlorides, and nitrates are typical metal salts which can be employed in the present invention. These salts may also contain a nonmetallic cation such as the ammonium ion. Typical salts thus are $CoCl_2$, $MnSO_4$, $SbCl_3$, $SnBr_2$, $NiCl_2$, $CuCl_2$, $SnCl_2$, $FeSO_4 \cdot 7H_2O$, $(NH_4)Fe_2(SO_4)_2 \cdot 6H_2O$, $FeCl_3$, $NH_4Fe(SO_4)_2 \cdot 12H_2O$, and $Fe(NO_3)_3 \cdot 9H_2O$. Salts which are particularly preferred for the present invention are $FeSO_4 \cdot 7H_2O$ and $SnCl_2$.

Comparative results of the stabilizing effects of ferrous and ferric salts indicate that the lower valence iron gives superior results. A possible explanation of this presumes that oxidation of the metal cation must occur during some stage of the chromium dioxide surface reaction. The $Fe^{+2}$ to $Fe^{+3}$ oxidation would be expected to occur readily either in solution or on the chromium dioxide surface. $Fe^{+4}$, $Fe^{+5}$, and $Fe^{+6}$ are known to exist in combination with oxygen, but these high oxidation states are not known in solution. Therefore $Fe^{+3}$ oxidation would only be expected to occur on the chromium dioxide surface, with $CrO_2$ acting as a strong oxidizing agent and providing oxygen atoms on the particle surface.

The process of the present invention avoids the complexities required for prior art methods of producing magnetic iron or iron oxide on $CrO_2$ particle surfaces. In the event iron salts are employed in the present invention it is not necessary to precipitate either $Fe(OH)_2$ or $Fe(OH)_3$ under alkaline conditions. Formation of the metal adduct in the present invention is not dependent on having the hydroxide ion concentration exceed the solubility product for precipitation of the cation of the metal salt. The process of the present invention can proceed under neutral or acid conditions where the prior art would be inoperative. A further simplification of the present invention is the absence of the requirement for any additional reducing step via the addition of a reducing agent or electrolysis.

The reaction of the present invention proceeds without the requirement for either high temperature or pressures which are typical of the synthesis reaction for forming acicular chromium dioxide. By simply mixing the acicular chromium dioxide with a water solution of metal salt at a temperature of from −10°C to 110°C the reaction can proceed rapidly to completion. Depending on variables such as concentration, surface area, temperature, and oxidizability, the reaction time can range from a few minutes to a few hours. For a particular system the course of the reaction can be studied by a variety of methods, for example; solution analysis for unreacted salt, pH changes, weight gain by the $CrO_2$ particles, lower chromate liberation, or x-ray surface analysis.

Generally, high acidity is undesirable in carrying out the process of the invention if the reaction to form the cation adduct is to be carried out using metal containers. Unless the reaction is carried out using special materials or alloys, acid will create corrosion problems which will limit equipment life and contaminate the reaction mixture. It has been found that a ferrous sulfate solution is effective when used at a pH of 5 to 8. This near neutral pH assures that the iron will not precipitate out of the reaction mixture, and avoids the adverse effects of corrosion and contamination.

A technique called Electron Scanning Chemical Analysis (ESCA) can be used to determine that a metal adduct has been formed on the surface of the acicular chromium dioxide. In this technique, soft x-rays bombard the atoms situated on the particle surface and cause a secondary emission of electrons. The electron spectra thus produced can be used to characterize the surface atoms and their valence states.

Simple weight analysis also shows that the metal adduct is produced in direct proportion to the amount of metal cation added. In a particular instance, a $CrO_2$ sample of known weight was treated with a metal salt solution, washed to remove unreacted salt, dried, and weighed. As a control, a sample of known weight was treated with sodium sulfite, as per U.S. 3,512,930, washed to remove unreacted salt, dried, and weighed. In the first instance, as more metal salt was added the sample weight increased, whereas in the

3

case of the control, increased sodium sulfite addition produced no observable weight difference. This shows that the weight gain of the present invention is clearly distinct from the prior art.

Chromium dioxide particles can be tested for stabilization against degradation using a soluble chromate test. After being rinsed in water to remove surface impurities, a 0.840 g sample of chromium dioxide is placed in a stoppered 25 ml volumetric flask with distilled water and constantly shaken for 24 hours while being held at 65°C. Unstabilized chromium dioxide will be degraded by hot water and chromate ions can be detected in the water. A magnet can be used to hold the chromium dioxide to the bottom of the flask while a sample is removed. A 0.6 ml sample is added to 4.4 ml of 10N NaOH to provide a stable chromate solution for testing in a visual spectrometer to determine the 367.5 μm peak for chromate. Parts per million (ppm) values can be calculated in accordance with Beer's law.

Chromium dioxide particles which have not been stabilized have soluble chromate values above 500 ppm. Even when $CrO_2$ particles have been treated so that soluble chromate values are in the 400 to 500 ppm range, tape made with this oxide would not be expected to age well. When the chromium dioxide particles show test values below 200 ppm they would be expected to be very stable when used in tapes.

The following examples serve to illustrate the present invention.

Example 1

A 318 kg batch of commercial grade acicular ferromagnetic chromium dioxide was upgraded by the process described in U.S. 3,529,390. In this process the $CrO_2$ is heated to 280°C in the presence of air moving at the rate of 2 cu.ft/min., held for 20 min., and then cooled to room temperature. A 6.8 Kg sample was removed for experimental and control tests.

To 20 g. of the upgraded sample in a glass vessel was added 400 ml. of a .018 M solution of ferrous sulfate to form a slurry which was held at 23°C for 30 min. while being stirred. The slurry was allowed to settle on a magnet for 7 minutes. The supernatant liquid was decanted and the $CrO_2$ was twice washed with 350 ml portions of distilled water with 2 minutes of stirring and followed by 5 minutes of settling before decantation. The $CrO_2$ was dried in a vacuum oven at 65°C. A 20 g sample of the same upgraded $CrO_2$ was stabilized with sodium sulfite as described in U.S. 3,512,930 and similarly twice washed, filtered, and dried and served as a control.

Both the control and the sample treated with ferrous sulfate were weighed. The latter sample showed a 1.54% weight increase while the control weighed .32% less than before the stabilization treatment Samples were also examined by X-ray diffraction, ESCA, and wet chemical analysis.

X-ray diffraction of the control before and after reaction with sodium sulfite revealed the appearance of a new line with an interplanar spacing of 3.151 Å as taught by U.S. 3,513,930. Similar examination of the ferrous sulfate treated sample did not show this line. The absence of the 3.151 Å line indicates the present invention provides stabilization by a different chemical reaction than the prior art.

While ESCA revealed no significant differences between the upgraded control before or after sodium sulfite treatment, the experimental sample showed surface iron in the amount of 10.5 atomic %.

Table 1 contains a comparison of properties.

TABLE 1

| Sample treatment | σs | σr | Soluble Chromate $(CrO_4)=(ppm)$ |
|---|---|---|---|
| none | 79.2 | 38.7 | 600+ |
| $Na_2SO_3$ (control) | 73.6 | 36.3 | 318 |
| $FeSO_4$ | 77.4 | 38.6 | 177 |

The high chromate value for the upgraded but unstabilized starting material is indicative of poor stability which makes this material unsuitable for use in tape or disk manufacture. The superiority of the $FeSO_4$-treated sample over both the starting material and the control is indicated by its superior magnetic properties in conjunction with its lower chromate values, which indicates increased stability.

The control and the $FeSO_4$-treated sample were each conventionally formulated and coated on polyester strips to produce an audio tape. The tapes showed comparable output and noise performance. A comparison of tapehead abrasion showed improvement, relative to the control, for the $FeSO_4$-treated sample. The results are given in Table 2.

**0 078 042**

TABLE 2
Audio output dB

| Sample | 500 Hz | 5 KHz | 10 KHz | 15 KHz | Noise | $\mu$/100 Hrs. head wear |
|---|---|---|---|---|---|---|
| Control | 0 | 0 | 0 | 0 | 0 | 10 |
| $FeSO_4$-treated | −1.1 | +1.5 | +3.2 | +4.3 | 0 | 8 |

Example 2

Experiments were run as in Example 1 except that the g salt/g $CrO_2$ was varied for both the control and the invention.

The results demonstrated a weight gain as metal adduct formed upon the surface of the $CrO_2$ particles as higher amounts of metal salt were used. They also demonstrated a clear advantage in quality, in terms of better magnetic properties and lower soluble chromate. This is illustrated in Figure 1. This graph compares $Fe^{+2}$ addition (broken line) with prior art sodium sulfite addition (solid line), in terms of weight, chromate, and retentivity ($\sigma r$) as a function of salt addition. As increasing amounts of soluble ferrous sulfate are reacted with the $CrO_2$ a steady weight gain results, along with a lowering of soluble chromate. As increasing amounts of sodium sulfite react with the $CrO_2$ a weight loss occurs and chromate values do not decrease as much or as rapidly as the present invention. The magnetic strength of the present invention remains consistently above the prior art control.

Example 3

Experiments were run as in Example 2 except that $SnCl_2$ was used as the metal salt instead of ferrous sulfate. The results are shown in Figure 2. This graph illustrates a comparison of $Sn^{+2}$ addition (broken line) with prior art sodium sulfite addition (solid line). As in Figure 1, the lowering of soluble chromate is superior to the control. As shown, the tin produces a slightly higher weight gain than observed for iron and does not maintain magnetic strength above the control. As compared to the iron salt, the tin salt gives poorer retentivity, but the weight gain and improved chromate values are similar.

Example 4

Experiments were run as in Example 2 except that $FeCl_3$ was used instead of ferrous sulfate. While the weight gain was less than observed for an equimolar amount of ferrous sulfate, the $FeCl_3$ functioned as a stabilizing metal salt without adversely lowering the magnetic properties of acicular chromium dioxide.

Example 5

Experiments were run as in Example 1, but replacing ferrous sulfate with zinc, manganese, nickel, and copper salts. Only zinc salts were found to be ineffective insofar as significantly reducing the chromate content of the ferromagnetic chromium dioxide. See Table 3.

TABLE 3

| Sample | Stabilization treatment | Treated product $CrO_2$ | | | |
|---|---|---|---|---|---|
| | | Weight change, % | $\sigma s$ | $\sigma r$ | $(CrO_4)=$ |
| Starting material | none | — | 79.2 | 38.7 | 600+ |
| Control | $Na_2SO_3$ | −.32 | 73.6 | 36.3 | 318 |
| Experiment | $ZnSO_4$ | −.87 | 79.7 | 38.8 | 600+ |
| Experiment | $Zn(NO_3)_2$ | −.88 | 79.9 | 39.0 | 556 |
| Experiment | $CoCl_2$ | −.77 | 80.2 | 38.9 | 431 |
| Experiment | $MnSO_4$ | −.41 | 80.1 | 38.3 | 208 |
| Experiment | $NiCl_2$ | −.77 | 80.1 | 38.3 | 227 |
| Experiment | $CuCl_2$ | −.42 | 80.2 | 34.5 | 373 |

## Example 6

A batch of commercial grade chromium dioxide was prepared without the upgrading treatment of Example 1. Portions were reacted with sodium sulfite and served as controls. Other portions were treated with $FeSO_4$ and $SnCl_2$ according to the present invention. Table 4 gives comparative results.

TABLE 4

| Sample | Salt | Treatment Ratio g/salt/ g $CrO_2$ | Δ wt. | iHc | σs | σr | $(CrO_4)$= |
|---|---|---|---|---|---|---|---|
| Starting material | None | – | −1.80 | 572 | 79.7 | 39.4 | 600+ |
| Control | $Na_2SO_3$ | .041 | −0.96 | 599 | 76.5 | 37.8 | 600+ |
| Control | $Na_2SO_3$ | .080 | −0.62 | 592 | 72.9 | 36.1 | 600+ |
| Control | $Na_2SO_3$ | .162 | −0.62 | 594 | 72.3 | 35.6 | 533 |
| Invention | $FeSO_4$ | .050 | −0.08 | 590 | 77.2 | 38.2 | 370 |
| Invention | $FeSO_4$ | .100 | +1.08 | 593 | 77.3 | 38.0 | 396 |
| Invention | $FeSO_4$ | .201 | +3.79 | 592 | 73.6 | 36.5 | 373 |
| Invention | $SnCl_2$ | .030 | +0.74 | 590 | 77.2 | 38.2 | 573 |
| Invention | $SnCl_2$ | .061 | +3.13 | 599 | 74.0 | 36.5 | 552 |
| Invention | $SnCl_2$ | .121 | +7.16 | 597 | 69.6 | 34.5 | 361 |

The significance of the loss in weight for the starting material is that all samples were washed to remove soluble materials including chromate ions. The 600+ chromate values are indicative of chromium dioxide as manufactured, and materials having such content would not be expected to give satisfactory results if used in a binder for tape manufacture.

As the results indicate, both iron and tin gave lower chromate values than the starting material and the control, but the test samples containing iron were superior to those containing tin in preserving magnetic properties.

## Example 7

Experiment 1 was repeated, with some variations. After the addition of the ferrous sulfate solution and stirring for 25 min. the pH of the mixture was measured as 2.1. The pH was then adjusted to 5.0 with $NH_4OH$. The neutralized iron salt remained in contact with the chromium dioxide particles for 5 min. under mild agitation.

After decantation, washing, etc. the resulting stabilized chromium dioxide samples A and B were given a test comparison with the control, with the results shown in Table 5. Adjustment of pH did not affect the improvement in chromate values.

TABLE 5

| Sample | Stabilization treatment | pH at end of treatment | Δ wt. | Treated $CrO_2$ σs | σr | $(CrO_4)$= |
|---|---|---|---|---|---|---|
| Control | $Na_2SO_3$ | 8.6 | −.32 | 73.6 | 36.3 | 318 |
| A | $FeSO_4$ | 2.2 | +4.15 | 74.4 | 36.6 | 152 |
| B | $FeSO_4$ | 5.0 | +3.17 | 72.6 | 35.4 | 193 |

## Example 8

Ferric chloride, ferrous ammonium sulfate and ferric ammonium sulfate were compared with ferrous sulfate in the process described in Example 1. Results are shown in Table 6.

6

0 078 042

TABLE 6

| Sample | Stabilization treatment | Δ wt.% | Treated CrO$_2$ | | |
|---|---|---|---|---|---|
| | | | σs | σr | (CrO$_4$)$_=$ |
| Control | Na$_2$SO$_3$ | −.32 | 73.6 | 36.3 | 318 |
| Experiment | Fe$^{+2}$ Sulfate | 1.54 | 77.4 | 38.6 | 177 |
| Experiment | Fe$^{+3}$ Chloride | −.24 | 81.1 | 39.6 | 398 |
| Experiment | Fe$^{+2}$ Am. Sulfate | +1.49 | 77.4 | 38.1 | 227 |
| Experiment | Fe$^{+3}$ Am. Sulfate | +.61 | 81.5 | 40.2 | 287 |

The foregoing Examples demonstrate that the present invention uses to good advantage materials which are generally discarded, particularly ferrous sulfate, and it does not require forming or depositing a ferromagnetic metal coating on the ferromagnetic CrO$_2$ particles. On the contrary it permits formation of a coating on the CrO$_2$ particles which is neither metallic nor ferromagnetic; yet this coating surprisingly improves, rather than degrades, the overall ferromagnetic properties of the product.

**Claims**

1. A stabilized ferromagnetic chromium dioxide composition characterized by acicular ferromagnetic chromium dioxide particles having a nonmagnetic protective surface phase composed of the adduct into the surface structure formed by contact between the particle surface and an aqueous solution of a metal salt, said protective surface phase being determined by soft x-ray analysis (ESCA) as containing 0.01 to 0.25 atoms of said included metal per atom of chromium.

2. The composition of claim 1 wherein the included metal is iron, tin, cobalt, or manganese.

3. The composition of claim 1 wherein the metal salt yields Fe$^{+2}$ or Sn$^{+2}$ cations in solution.

4. A magnetic recording member comprising a support bearing a layer, which is characterized by containing the stabilized ferromagnetic chromium dioxide composition of claim 1.

5. A process for preparing a stabilized ferromagnetic chromium dioxide composition which is characterized by contacting acicular ferromagnetic chromium dioxide particles with an aqueous solution of a metal cation to form a protective surface adduct on said particles, said process being conducted at a temperature of −10°C to 110°C and at a pH of 1 to 8.

6. The process of claim 5 wherein the metal cation is a member of the group consisting of Fe$^{+2}$, Fe$^{+3}$, Sn$^{+2}$, Co$^{+2}$, and Mn$^{+2}$.

7. The process of claim 5 wherein the protective surface phase imparts a weight gain to the ferromagnetic chromium dioxide particles which is directly proportional to the amount of metal cation reacted therewith.

8. The process of claim 5 wherein the ferromagnetic chromium dioxide which is contacted with the metal cation solution was made by heating preformed CrO$_2$ having a saturation of at least 75 emu./g. and a coercive force of 200—800 oersteds in an oxidizing environment at 150°C to 450°C at a pressure of 0.2—3000 atmospheres.

9. The process of claim 5 wherein the acicular ferromagnetic chromium dioxide particles are contacted with an aqueous solution of FeSO$_4$ · 7H$_2$O or SnCl$_2$.

**Patentansprüche**

1. Stabilisierte ferromagnetische Chromdioxid-Zusammensetzung, gekennzeichnet durch nadelförmige ferromagnetische Chromdioxid-Teilchen mit einer nicht-magnetischen schützenden Oberfläche, bestehend aus dem Addukt in der Oberflächenstruktur, das durch Kontakt zwischen der Teilchen-Oberfläche und einer wäßrigen Lösung eines Metall-Salzes gebildet ist, wobei die Oberflächen-Schutzphase pro Chrom-Atom 0,01 bis 0,25 Atome des eingebauten Metalls, bestimmt durch Analyse mit weicher Röntgenstrahlung (ESCA), enthält.

2. Zusammensetzung nach Anspruch 1, dadurch gekennzeichnet, daß das eingebaute Metall Eisen, Zinn, Cobalt oder Mangan ist.

3. Zusammensetzung nach Anspruch 1, dadurch gekennzeichnet, daß das Metall-Salz in Lösung Fe$^{+2}$ oder Sn$^{+2}$- Kationen liefert.

4. Magnetisches Aufzeichnungsmedium aus einem Träger mit einer darauf befindlichen Schicht, dadurch gekennzeichnet, daß die Schicht die stabilisierte ferromagnetische Chromdioxid-Zusammensetzung nach Anspruch 1 enthält.

5. Verfahren zur Herstellung einer stabilisierten ferromagnetischen Chromdioxid-Zusammensetzung, dadurch gekennzeichnet, daß nadelförmige ferromagnetische Chromdioxid-Teilchen mit einer wäßrigen

7

Lösung eines Metall-Kations in Kontakt gebracht werden, wodurch ein schützendes Oberflächen-Addukt auf den Teilchen gebildet wird, wobei das Verfahren bei einer Temperatur von −10°C bis 110°C und einem pH von 1 bis 8 durchgeführt wird.

6. Verfahren nach Anspruch 5, dadurch gekennzeichnet, daß das Metall-Kation eines aus der aus $Fe^{+2}$, $Fe^{+3}$, $Sn^{+2}$, $Co^{2+}$ und $Mn^{2+}$ bestehenden Gruppe ist.

7. Verfahren nach Anspruch 5, dadurch gekennzeichnet, daß die schützende Oberfläche eine Gewichtszunahme der ferromagnetischen Chromdioxid-Teilchen bewirkt, die der Menge des mit diesen umgesetzten Metall-Kations direkt proportional ist.

8. Verfahren nach Anspruch 5, dadurch gekennzeichnet, daß das ferromagnetische Chromdioxid, das mit der Lösung des Metall-Kations in Kontakt gebracht wird, hergestellt wurde durch Erhitzen eines vorgebildeten $CrO_2$ mit einer Sättigung von wenigstens 75 emu/g und einer Koerzitivkraft von 200 bis 800 Oersted auf 150°C bis 450°C bei einem Druck von 0,2 bis 3000 Atmosphären in einer oxydierenden Umgebung.

9. Verfahren nach Anspruch 5, dadurch gekennzeichnet, daß die nadelförmigen ferromagnetischen Chromdioxid-Teilchen mit einer wäßrigen Lösung von $FeSO_4 \cdot 7H_2O$ oder $SnCl_2$ in Kontakt gebracht werden.

**Revendications**

1. Une composition de dioxyde de chrome ferromagnétique stabilisée caractérisée par des particules aciculaires de dioxyde de chrome ferromagnétique ayant une phase superficielle protectrice non-magnétique composée du produit d'addition, dans la structure superficielle, formée par le contact entre la surface des particules et une solution aqueuse d'un sel de métal, cette phase superficielle protectrice étant déterminée par analyse aux rayons X mous (ESCA) comme contenant 0,01 à 0,25 atomes dudit métal inclus par atome de chrome.

2. La composition de la revendication 1, dans laquelle le métal inclus est le fer, l'étain, le cobalt ou le manganèse.

3. La composition de la revendication 1, dans laquelle le sel de métal fournit des cations $Fe^{+2}$ ou $Sn^{+2}$ en solution.

4. Un élément d'enregistrement magnétique comprenant un support portant une couche, caractérisé en ce qu'il contient la composition de dioxyde de chrome ferromagnétique stabilisée de la revendication 1.

5. Un procédé de préparation d'une composition de dioxyde de chrome ferromagnétique stabilisée, caractérisé en ce qu'on met en contact des particules aciculaires de dioxyde de chrome ferromagnétique avec une solution aqueuse d'un cation de métal pour former un produit d'addition superficiel protecteur sur ces particules, le procédé étant conduit à une température de −10°C à 110°C et à un pH de 1 à 8.

6. Le procédé de la revendication 5, dans lequel le cation de métal est un nombre du groupe constitué de $Fe^{+2}$, $Fe^{+3}$, $Sn^{+2}$, $Co^{+2}$ et $Mn^{+2}$.

7. Le procédé de la revendication 5, dans lequel la phase superficielle protectrice confère un gain de poids aux particules de dioxyde de chrome ferromagnétique qui est directement proportionnel à la quantité de cations de métal mise à réagir avec elles.

8. Le procédé de la revendication 5, dans lequel le dioxyde de chrome ferromagnétique qui est mise en contact avec la solution de cations de métal est préparé en chauffant du $CrO_2$ préformé ayant une saturation d'au moins 75 uem/g et une force coercitive de 200—800 oersteds dans un environnement oxydant à 150°C à 450°C et sous une pression de 0.2—3000 atmosphères.

9. Le procédé de la revendication 5, dans lequel les particules aciculaires de dioxyde de chrome ferromagnétique sont mises en contact avec une solution aqueuse de $FeSO_4, 7H_2O$ ou de $SnCl_2$.

# F I G. 1

# F I G. 2